# EUROPÄISCHE PATENTSCHRIFT

(11) **EP 2 912 764 B1**
(45) Veröffentlichungstag und Bekanntmachung des Hinweises auf die Patenterteilung: **13.10.2021**
(21) Anmeldenummer: 13704018.4
(22) Anmeldetag: 24.01.2013
(51) Int. Cl.: H02M 1/32, H02M 7/483, H02M 7/219

(54) **MODULARER MEHRSTUFENUMRICHTER MIT SCHUTZABLEITER**
MODULAR MULTI STAGE INVERTER COMPRISING SURGE ARRESTER
CONVERTISSEUR MODULAIRE MULTI-ÉTAGÉ POURVU D'UN CONDUCTEUR DE PROTECTION

(43) Veröffentlichungstag der Anmeldung: 02.09.2015
(73) Patentinhaber: Siemens Energy Global GmbH & Co. KG, 81739 München (DE)
(72) Erfinder: DOMMASCHK, Mike, 91096 Möhrendorf (DE); EBNER, Günter, 91239 Henfenfeld (DE); WÜRFLINGER, Klaus, 90419 Nürnberg (DE)
(86) Internationale Anmeldenummer: PCT/EP2013/051349
(87) Internationale Veröffentlichungsnummer: WO 2014/114339

(56) Entgegenhaltungen:
- WO-A1-02/23705
- WO-A1-2008/067785
- WO-A1-2011/098117
- DE-A1-102006 036 092
- US-A1- 2012 218 672
- "Overvoltage protection - arresters"; "Chapter 8" In: Åke Ekström: "High Power Electronics HVDC and SVC", 30 June 1990 (1990-06-30), Royal Institue of Technology, Stockholm pages 8-12-8-17,

## Beschreibung

Die Erfindung betrifft eine Vorrichtung zum Übertragen einer elektrischen Leistung zwischen einem Wechselspannungsnetz und einem Gleichspannungsnetz im Hochspannungsbereich mit Phasenmodulen, die jeweils wenigstens einen gemeinsamen Gleichspannungsanschluss sowie einen separaten Wechselspannungsanschluss aufweisen, wobei sich zwischen jedem Gleichspannungsanschluss und jedem Wechselspannungsanschluss ein Phasenmodulzweig erstreckt, der über eine Reihenschaltung von zweipoligen Submodulen verfügt, die jeweils einen Energiespeicher und eine dem Energiespeicher parallel geschaltete Leistungshalbleiterschaltung aufweisen, so dass je nach Ansteuerung der Leistungshalbleiterschaltung an den beiden Submodulanschlussklemmen entweder die an dem Energiespeicher abfallende Spannung oder aber eine Nullspannung erzeugbar ist, und mit einem sekundärseitig einen Sternpunkt ausbildenden Umrichtertransformator, der primärseitig mit einem Wechselspannungsnetz und sekundärseitig mit jedem Wechselspannungsanschluss verbindbar oder verbunden ist. Der Sternpunkt der mit dem Umrichter verbundenen Sekundärwicklung wird im Folgenden als Umrichtersternpunkt bezeichnet.

Eine solche Vorrichtung ist aus der ständigen Praxis unter dem Begriff "modularer Mehrstufenumrichter" bereits bekannt. Modulare Mehrstufenumrichter werden beispielsweise im Bereich der Hochspannungsgleichstromübertragung eingesetzt. Aufgrund seiner modularen Topologie ist der Umrichter einfach skalierbar und kann leicht an die jeweiligen Anforderungen angepasst werden. Die Spannung an den Wechselspannungsanschlüssen des modularen Mehrstufenumrichters kann stufenförmig erhöht werden, wobei die Höhe der Stufen der an dem jeweiligen Energiespeicher abfallenden Spannung entspricht. Die Leistungshalbleiterschaltung weist ein- und abschaltbare Leistungshalbleiterschalter auf, wobei insbesondere so genannte IGBTs zum Einsatz gelangen. Handelsübliche IGBTs weisen derzeit eine Sperrfähigkeit zwischen 1,7 kV und 6,5 kV auf, so dass im Hochspannungsbereich hunderte von Submodulen in Reihe geschaltet sind. Somit kann ohne großen Filteraufwand ein nahezu harmonischer Spannungsverlauf am Wechselspannungsanschluss erzeugt werden. Zum Schutz der Leistungshalbleiterschalter der Submodule sind Bypassschalter vorgesehen, die zwischen den Submodulanschlussklemmen angeordnet sind und mit denen eine Überbrückung des jeweils zugeordneten Submoduls ermöglicht ist. Bei einer Überladung des gesamten Umrichters besteht die Gefahr, dass ungewollt sämtliche Bypassschalter gezündet werden. Dies kann jedoch zu Nachteilen führen.

Aus der Offenlegungsschrift WO 2011/098117 A1 ist ein Voltage-Source-Converter bekannt, der einen positiven Gleichspannungsanschluss, einen negativen Gleichspannungsanschluss, drei Wechselspannungsanschlüsse und drei Phasenmodule aufweist. Die Phasenmodule bestehen jeweils aus einer Reihenschaltung von Submodulen, welche jeweils einen Energiespeicher und eine dem Energiespeicher parallel geschaltete Leistungshalbleiterschaltung aufweisen.

Die Patentanmeldung US 2012/0218672 A1 offenbart eine Schaltung zum Schutz eines elektrischen Systems gegen Überspannung. Die Schaltung verbindet einen Gleichstromanschluss des Systems mit Erdpotential. Die Schaltung weist zwei Überspannungsableiter, einen Schalter, einen Spannungssensor sowie eine Steuerung auf.

Aus der Schrift "High Power Electronics HVDC and SVC" von Ake Ekström, Kapitel "Overvoltage protection - arresters", Chapter 8, 30. Juni 1990, Royal Institute of Technology, Stockholm, Seiten 8-12 bis 8-17 ist bekannt, zwischen den beiden Gleichspannungsanschlüssen einer HGÜ-Stromrichterstation und Erdpotential jeweils einen Überspannungsableiter anzuordnen. Die Veröffentlichung WO 2008/067785 A1 offenbart eine Vorrichtung zum Umrichten von elektrischem Strom, deren Phasenmodule eine Reihenschaltung von Submodulen aufweisen, die jeweils in Halbbrückenschaltung ausgeführt sind.

Aufgabe der Erfindung ist es, eine Vorrichtung der eingangs genannten Art bereitzustellen, bei der ein besserer Schutz vor einer Überladung bereitgestellt ist.

Die Erfindung löst diese Aufgabe dadurch, dass wenigstens ein Überspannungsableiter vorgesehen ist, der sich zwischen dem oder einem der gemeinsamen Gleichspannungsanschlüsse und dem nicht geerdeten Umrichtersternpunkt des Umrichtertransformators erstreckt.

Erfindungsgemäß ist vorgesehen, Überspannungsableiter zwischen den Gleichspannungsanschlüssen und dem umrichterseitigen Transformatorsternpunkt anzuordnen. Im Rahmen der Erfindung muss der Überspannungsableiter nicht zwingend direkt mit dem Gleichspannungsanschluss verbunden sein. Er kann sich auch zwischen dem Umrichtersternpunkt und einem Potentialpunkt erstrecken, der zwischen dem leistungselektronischen Bestandteil des jeweiligen Phasenmodulzweigs und einer Induktivität, wie z.B. einer Gleichspannungsdrossel, liegt. Wesentlich ist im Rahmen der Erfindung, dass das an dem Überspannungsleiter abfallende Potential vergleichbar ist mit dem zwischen dem Umrichtersternpunkt und dem besagten Gleichspannungsanschluss abfallenden Potential und von diesem Potential mitbestimmt wird. Dies ermöglicht den Einsatz von Überspannungsableitern zum Schutz eines eingangs genannten modularen Mehrstufenumrichters. Überspannungsableiter weisen in der Regel eine Kennlinie auf, aus der sich ein Verhältnis zwischen Durchbruchsspannung und Betriebsspannung von etwa 1,6 bis 2,0 ergibt. Wäre ein solcher Überspannungsableiter einem Phasenmodulzweig parallel geschaltet, also zwischen dem Gleichspannungsanschluss und dem Wechselspannungsanschluss angeordnet, könnte dieser keinen Schutz bereitstellen. Bei den derzeit bekannten Submodulen liegt die Auslösespannung des Bypassschalters eines jeden Submoduls bei etwa 1,5 p.u. der maximalen Betriebsspannung. Ein wirksamer Schutz wäre somit mit einem Überspannungsableiter nicht möglich. Die Erfindung basiert auf der Erkenntnis, dass die an einem Phasenmodulzweig abfallende Spannung in der Größenordnung der Gleichspannung liegt, die gleichspannungsseitig an der gesamten Vorrichtung abfällt. Im Gegensatz dazu beträgt die Potenzialdifferenz zwischen dem gemeinsamen Gleichspannungsanschluss und dem Umrichtersternpunkt lediglich etwa die Hälfte der Gleichspannung, die gleichspannungsseitig an der gesamten Vorrichtung abfällt. Wird somit der Überspannungsableiter zwischen den Umrichtersternpunkt des Umrichtertransformators und dem gemeinsamen Gleichspannungsanschluss geschaltet, ist ein wirksamer Schutz der Phasenmodulzweige durch die Erfindung geschaffen. Im Rahmen der Erfindung ist es keinesfalls erforderlich, dass die Spannung symmetrisch zwischen den Gleichspannungsanschlüssen bezüglich des Erdpotentials also beispielsweise zu +300 kV und -300 kV, aufgeteilt ist. Einer der Gleichspannungsanschlüsse kann im Rahmen der Erfindung beispielsweise auf einen dem Erdpotential nahen Potential oder einem Mittelspannungspotential liegen, während der andere Gleichspannungsanschluss beispielsweise auf +600 kV liegt.

Im Rahmen der Erfindung weist die Leistungshalbleiterschaltung Leistungshalbleiterschalter auf, die sowohl ein- als auch abgeschaltet werden können. Solche Leistungshalbleiterschalter sind beispielsweise IGBTs, GTOs, IGCTs oder dergleichen. Jedem dieser ein- und abschaltbaren Leistungshalbleiterschalter eine Freilaufdiode gegensinnig parallel geschaltet. Alternativ dazu können jedoch auch rückwärts leitfähige Leistungshalbleiterschalter zum Einsatz gelangen.

Grundsätzlich ist der Aufbau der Leistungshalbleiterschaltung im Rahmen der Erfindung beliebig.

Vorteilhafterweise bilden die Submodule jedoch zumindest teilweise eine Halbbrückenschaltung aus. Bei einer Halbbrückenschaltung besteht die Leistungshalbleiterschaltung aus einer Reihenschaltung aus zwei ein- und abschaltbaren Leistungshalbleiterschaltern, wobei die Reihenschaltung dem Energiespeicher parallel geschaltet ist. Eine erste Submodulanschlussklemme ist mit dem Potenzialpunkt zwischen den Leistungshalbleiterschaltern der Reihenschaltung verbunden. Die zweite Submodulanschlussklemme liegt direkt an einem Pol des Energiespeichers an.

Abweichend oder zusätzlich hierzu ist es möglich, die Submodule vollständig oder zumindest teilweise als Vollbrückenschaltung auszubilden. Bei einer Vollbrückenschaltung sind zwei Reihenschaltungen aus jeweils zwei ein- und abschaltbaren Leistungshalbleiterschaltern vorgesehen, wobei beide Reihenschaltungen dem Energiespeicher parallel geschaltet sind. Eine erste Submodulanschlussklemme ist mit dem Potenzialpunkt zwischen den ein- und abschaltbaren Leistungshalbleiterschaltern der ersten Reihenschaltung und die zweite Submodulanschlussklemme mit dem Potenzialpunkt zwischen den ein- und abschaltbaren Leistungshalbleiterschaltern der zweiten Reihenschaltung verbunden.

Zweckmäßigerweise weist jeder Phasenmodulzweig Gleichspannungsanschlüsse auf, wobei zwei Überspannungsableiter vorgesehen sind, die sich jeweils zwischen einem der Gleichspannungsanschlüsse und dem Umrichtersternpunkt erstrecken. Die Vorrichtung weist im Rahmen der Erfindung Phasenmodule auf, deren Anzahl der Anzahl der Phasen des angeschlossenen Wechselspannungsnetzes entsprechen. Jede Phase des Wechselspannungsnetzes ist über den Umrichtertransformator mit einem der Wechselspannungsanschlüsse verbunden. Darüber hinaus sind zwei unterschiedlich polarisierte Gleichspannungsanschlüsse vorgesehen, die gegenüber dem Erdpotenzial auf einem positiven Gleichspannungspotenzial bzw. einem negativen Gleichspannungspotenzial liegen. Beispielsweise liegt die zwischen dem positiven Gleichspannungsanschluss und dem negativen Gleichspannungsanschluss der Vorrichtung abfallende Spannung bei 600 kV. Diese Gesamtspannung ist symmetrisch auf die beiden Gleichspannungsleitungen verteilt, die gegenüber dem Erdpotential +300 kV beziehungsweise -300 kV beträgt. Alternativ liegt einer der Gleichspannungsanschlüsse auf Erdpotential.

Zweckmäßigerweise weist der Umrichtertransformator Primärwicklungen auf, die einen geerdeten Sternpunkt ausbilden, wobei Ausgleichswicklungen vorgesehen sind, die in einer Dreiecksschaltung miteinander verbunden sind.

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei die
- Figur: ein Ausführungsbeispiel der erfindungsgemäßen Vorrichtung schematisch verdeutlicht.

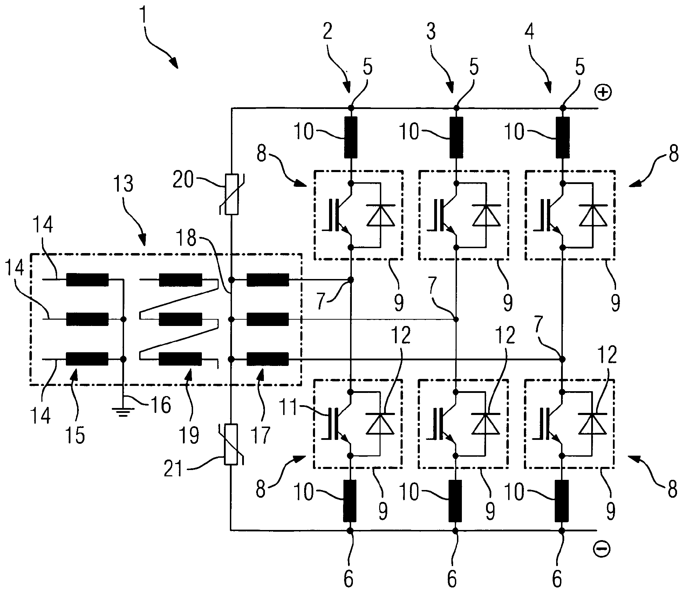

Figur 1 zeigt ein Ausführungsbeispiel der erfindungsgemäßen Vorrichtung 1. Die Vorrichtung 1 weist drei Phasenmodule 2, 3 und 4 auf, die jeweils einen positiven gemeinsamen Gleichspannungsanschluss 5 sowie einen negativen gemeinsamen Gleichspannungsanschluss 6 aufweisen. Darüber hinaus ist jedes der Phasenmodule 2, 3 und 4 mit einem Wechselspannungsanschluss 7 ausgerüstet. Zwischen jedem der gemeinsamen Gleichspannungsanschlüsse 5 bzw. 6 und dem jeweiligen Wechselspannungsanschluss 7 erstrecken sich Phasenmodulzweige 8, die jeweils eine Reihenschaltung aus zweipoligen Submodulen 9 sowie eine Induktivität 10 aufweisen, die miteinander in Reihe geschaltet sind. Die Reihenfolge der Submodule 9 und der Induktivität 10 ist dabei beliebig. Jedes Phasenmodul 2, 3 und 4 weist somit zwei in Reihe angeordnete Phasenmodulzweige 8 auf. Die Reihenschaltung von zweipoligen Submodulen 9 ist nur schematisch dargestellt, wobei angedeutet ist, dass die Reihenschaltung IGBTs 11 als ein- und abschaltbare Leistungshalbleiterschalter aufweist, wobei jedem IGBT 11 eine Freilaufdiode 12 gegensinnig parallel geschaltet ist. Genauer ausgedrückt bilden die zweipoligen Submodule 9 in dem in der Figur dargestellten Ausführungsbeispiel jedoch eine so genannte Halbbrückenschaltung aus, wobei jedes Submodul jeweils einen Energiespeicher sowie eine diesem Energiespeicher parallel geschaltete Reihenschaltung aus zwei IGBTs 11 mit jeweils gegensinniger Freilaufdiode 12 aufweist. Eine der Submodulanschlussklemmen ist mit dem Potenzialpunkt zwischen den beiden IGBTs 11 verbunden. Die andere Submodulanschlussklemme liegt direkt an einem der Pole des Energiespeichers an. Somit kann zwischen den besagten Submodulanschlussklemmen je nach Ansteuerung der IGBTs 11 entweder die an dem Energiespeicher abfallende Spannung positiv oder negativ oder aber eine Nullspannung erzeugt werden.

Aus der Figur ist ferner erkennbar, dass die Wechselspannungsanschlüsse 7 der Phasenmodule 2, 3, 4 über einen Umrichtertransformator 13 mit Phasen 14 eines ansonsten nicht weiter dargestellten Wechselspannungsnetzes verbunden ist. Der Umrichtertransformator 13 ist mit Primärwicklungen 15 ausgestattet, die zu einem geerdeten Sternpunkt 16 miteinander verschaltet sind. Die Sekundärwicklungen 17 des Umrichtertransformators 13 sind zu einem sekundärseitigen Umrichtersternpunkt 18 miteinander verbunden, der jedoch nicht geerdet ist. Zwischen den Primärwicklungen 15 und den Sekundärwicklungen 17 sind Ausgleichswicklungen 19 erkennbar, die in einer Dreiecksschaltung miteinander verbunden sind.

Zum Schutz der zu einer Grätz-Brücke miteinander verschalteten Phasenmodulzweige 8 und somit der gesamten Vorrichtung vor Überspannungen sind zwei Überspannungsableiter 20 und 21 vorgesehen, die sich jeweils zwischen einem der gemeinsamen Gleichspannungsanschlüsse 5 bzw. 6 und dem Umrichtersternpunkt 18 erstrecken.

Die Erfindung basiert auf der Erkenntnis, dass die maximale Betriebsspannung zwischen dem Wechselspannungsanschluss 7 sowie beispielsweise dem gemeinsamen positiven Gleichspannungsanschluss 5 in der Größenordnung der zwischen den gemeinsamen Gleichspannungsanschlüssen 5 und 6 abfallenden Spannungen liegen kann. Aufgrund des Ansprechverhaltens des Überspannungsableiters kann bei dieser Schaltungsvariante kein wirksamer Schutz durch einen Überspannungsableiter direkt über dem Phasenmodulzweig 8 bereitgestellt werden. Der wechselspannungsseitige Anschluss der Überspannungsableiter 20 bzw. 21 an den Umrichtersternpunkt 18 weist den Vorteil auf, dass die an dem jeweiligen Überspannungsableiter 20, 21 abfallende Betriebsspannung in der Größenordnung der Hälfte der maximalen Gleichspannung liegt, die zwischen den Gleichspannungsanschlüssen 5 und 6 abfällt. Somit werden bei internen Konverterfehlern die Überspannungsableiter 20 und 21 von ihrem hochohmigen in den niederohmigen Zustand überführt, bevor die Schutzeinrichtung der Submodule der Phasenmodule 2, 3 und 4 eingreift.

## Patentansprüche

1. Vorrichtung (1) zum Übertragen einer elektrischen Leistung zwischen einem Wechselspannungsnetz und einem Gleichspannungsnetz im Hochspannungsbereich mit
- Phasenmodulen (2,3,4), die jeweils wenigstens einen gemeinsamen Gleichspannungsanschluss (5,6) sowie einen separaten Wechselspannungsanschluss (7) aufweisen, wobei sich zwischen jedem Gleichspannungsanschluss (5,6) und jedem Wechselspannungsanschluss (7) ein Phasenmodulzweig (8) erstreckt, der über eine Reihenschaltung (9) von zweipoligen Submodulen verfügt, die jeweils einen Energiespeicher und eine dem Energiespeicher parallel geschaltete Leistungshalbleiterschaltung aufweisen, so dass je nach Ansteuerung der Leistungshalbleiterschaltung an den beiden Submodulanschlussklemmen entweder die an dem Energiespeicher abfallende Spannung oder aber eine Nullspannung erzeugbar ist, und
- einem sekundärseitig einen Umrichtersternpunkt (18) ausbildenden Umrichtertransformator (13), der primärseitig mit einem Wechselspannungsnetz (14) und sekundärseitig mit jedem Wechselspannungsanschluss (7) verbindbar oder verbunden ist, **dadurch gekennzeichnet, dass** der Umrichtersternpunkt (18) ein nicht geerdeter Umrichtersternpunkt ist, und
wenigstens ein Überspannungsableiter (20,21) vorgesehen ist,
der sich zwischen dem oder einem der gemeinsamen Gleichspannungsanschlüsse (5,6) und dem Umrichtersternpunkt (18) des Umrichtertransformators (13) erstreckt.

2. Vorrichtung (1) nach Anspruch 1,
**dadurch gekennzeichnet, dass**
die Submodule zumindest teilweise eine Halbbrückenschaltung ausbilden.

3. Vorrichtung (1) nach einem der vorhergehenden Ansprüche,
**dadurch gekennzeichnet, dass**
die Submodule zumindest teilweise eine Vollbrückenschaltung ausbilden.

4. Vorrichtung (1) nach einem der vorhergehenden Ansprüche,
**dadurch gekennzeichnet, dass**
jedes Phasenmodul (2,3,4) zwei Gleichspannungsanschlüsse (5,6) aufweist, wobei zwei Überspannungsableiter (20,21) vorgesehen sind, die sich jeweils zwischen einem der Gleichspannungsanschlüsse (5,6) oder zwischen Potentialpunkten mit vergleichbarem Potential und dem Umrichtersternpunkt (18) erstrecken.

5. Vorrichtung (1) nach einem der vorhergehenden Ansprüche,
**dadurch gekennzeichnet, dass**
der Umrichtertransformator (13) zu einem geerdeten Sternpunkt (16) verbundene Primärwicklungen (15) aufweist.

## Claims

1. Device (1) for transferring electrical power between an AC voltage network and a DC voltage network in the high-voltage range, including
- phase modules (2,3,4), each having at least one shared DC voltage terminal (5,6) and a separate AC voltage terminal (7), wherein one phase module branch (8) extends between each DC voltage terminal (5,6) and each AC voltage terminal (7), which includes a series circuit (9) made up of two-pole submodules, each having an energy storage device and a power semiconductor circuit connected in parallel with the energy storage device, so that, depending on the control of the power semiconductor circuit at the two submodule connection terminals, either the voltage dropping across the energy storage device or a zero voltage is able to be generated, and
- a converter transformer (13) forming a converter neutral point (18) on the secondary side, which is connectable or is connected to an AC voltage network (14) on the primary side and to each AC voltage terminal (7) on the secondary side, **characterized in that**
the converter neutral point (18) is an ungrounded converter neutral point, and
at least one surge arrester (20,21) is provided which extends between the or one of the shared DC voltage terminals (5,6) and the converter neutral point (18) of the converter transformer (13) .

2. Device (1) according to Claim 1,
**characterized in that**
the submodules at least partially form a half-bridge circuit.

3. Device (1) according to one of the preceding claims,
**characterized in that**
the submodules at least partially form a full-bridge circuit.

4. Device (1) according to one of the preceding claims,
**characterized in that**
each phase module (2,3,4) has two DC voltage terminals (5,6), wherein two surge arresters (20,21) are provided, each extending between one of the DC voltage terminals (5,6) or between potential points having a comparable potential and the converter neutral point (18).

5. Device (1) according to one of the preceding claims,
**characterized in that**
the converter transformer (13) has primary windings (15) connected at a grounded neutral point (16).

## Revendications

1. Montage (1) de transmission d'une puissance électrique entre un réseau de tension alternative et un réseau de tension continue dans le domaine de la haute tension, comprenant
- des modules (2, 3, 4) de phase, qui ont chacun au moins une borne (5, 6) commune de tension continue ainsi qu'une borne (7) distincte de tension alternative, dans lequel entre chaque borne (5, 6) de tension continue et chaque borne (7) de tension alternative s'étend une branche (8) de module de phase, qui dispose d'un circuit (9) série de sous-modules bipolaires, qui ont chacun un accumulateur d'énergie et un circuit à semi-conducteur de puissance monté en parallèle à l'accumulateur d'énergie de manière à pouvoir produire, suivant la commande du circuit à semi-conducteur de puissance, sur les deux bornes de raccordement de sous-modules soit la tension chutant aux bornes de l'accumulateur d'énergie soit une tension nulle, et
- un transformateur (13) convertisseur, qui constitue du côté secondaire un point (18) neutre de transformateur et qui est connecté ou peut l'être du côté primaire à un réseau (14) de tension alternative et du côté secondaire à chaque borne (7) de tension alternative,
**caractérisé en ce que**
le point (18) neutre du convertisseur est un point neutre de convertisseur qui n'est pas à la terre, et
il est prévu au moins un parafoudre (20, 21), qui s'étend entre la ou l'une des bornes (5, 6) communes de tension continue et le point (18) neutre de convertisseur du transformateur (13) convertisseur.

2. Montage (1) suivant la revendication 1,
**caractérisé en ce que** les sous-modules constituent au moins en partie un circuit en demi pont.

3. Montage (1) suivant l'une des revendications précédentes,
**caractérisé en ce que**
les sous-modules constituent au moins en partie un circuit en pont complet.

4. Montage (1) suivant l'une des revendications précédentes,
**caractérisé en ce que**
chaque module (2, 3, 4) de phase a deux bornes (5, 6) de tension continue, dans lequel il est prévu deux parafoudres (20, 21), qui s'étendent chacun entre l'une des bornes (5, 6) de tension continue ou entre des points de potentiel ayant un potentiel comparable et le point (18) neutre de convertisseur.

5. Montage (1) suivant l'une des revendications précédentes,
**caractérisé en ce que**
le transformateur (13) convertisseur a des enroulements (15) primaires connectés à un point (16) neutre mis à la terre.
